Europäisches Patentamt

European Patent Office

Office européen des brevets

(19)

(11) Veröffentlichungsnummer : **0 460 748 B1**

(12) ## EUROPÄISCHE PATENTSCHRIFT

(45) Veröffentlichungstag der Patentschrift :
**15.11.95 Patentblatt 95/46**

(51) Int. Cl.⁶ : **H04L 1/02,** H04B 7/02

(21) Anmeldenummer : **91201334.9**

(22) Anmeldetag : **03.06.91**

(54) **Empfänger mit mindestens zwei Emfangszweigen.**

(30) Priorität : **06.06.90 DE 4018044**

(43) Veröffentlichungstag der Anmeldung :
**11.12.91 Patentblatt 91/50**

(45) Bekanntmachung des Hinweises auf die
Patenterteilung :
**15.11.95 Patentblatt 95/46**

(84) Benannte Vertragsstaaten :
**DE ES FR GB IT**

(56) Entgegenhaltungen :
**WO-A-82/02633**
**DE-A- 3 338 510**
**US-A- 4 328 582**

(73) Patentinhaber : **Philips Patentverwaltung
GmbH
Röntgenstrasse 24
D-22335 Hamburg (DE)**

(84) **DE**
Patentinhaber : **Philips Electronics N.V.
Groenewoudseweg 1
NL-5621 BA Eindhoven (NL)**

(84) **ES FR GB IT**

(72) Erfinder : **Koch, Wolfgang, Dr.-Ing.
Simmelberger Weg 29a
W-8501 Heroldsberg (DE)**

(74) Vertreter : **Volmer, Georg, Dipl.-Ing. et al
Philips Patentverwaltung GmbH,
Röntgenstrasse 24
D-22335 Hamburg (DE)**

EP 0 460 748 B1

## Beschreibung

Die Erfindung betrifft einen Empfänger mit mindestens zwei Empfangszweigen zum Empfang einer gesendeten Datenfolge, bei dem die Signale jedes Empfangszweiges ihrer Empfangsgüte entsprechend kombiniert werden, wobei aus detektierten Datenelementen der einzelnen Empfangszweige mittels einer diesen Datenelementen zugeordneten Zuverlässigkeitsinformation die gesendete Datenfolge geschätzt wird.

Empfänger mit mindestens zwei Empfangszweigen, bei denen in jedem Empfangszweig jeweils ein Signal mit gleichem Signalinhalt empfangen wird, werden als Diversity-Empfänger bezeichnet. Beim sogenannten Raum-Diversity sind die Antennen der jeweiligen Empfangszweige räumlich einige Wellenlängen entfernt voneinander angeordnet. Beim sogenannten Frequenz-Diversity werden die Signale auf verschiedenen Frequenzen ausgesendet und empfangen. Wegen der für jeden Übertragungsweg bzw. jeder Frequenzlage verschiedenen Übertragungsbedingungen werden die Signale in den einzelnen Empfangszweigen mit unterschiedlicher Güte empfangen. Bei genügend großem Abstand der Antennen beim Raum-Diversity bzw. bei entsprechend großem Abstand der Frequenzlagen der Signale beim Frequenz-Diversity sind die Empfangsgüten der einzelnen Signale der Empfangszweige sogar voneinander statistisch unabhängig. Durch entsprechende Verarbeitung der in den einzelnen Empfangszweigen empfangenen Signale ist es daher möglich, ein Empfangssignal zu gewinnen, welches bessere Eigenschaften (z.B. hinsichtlich des Störabstandes) aufweist als jedes der einzeln empfangenen Signale.

Aus dem Buch "Microwave Mobile Communications" von William C. Jakes Jr. ist unter dem Begriff "Maximal Ratio Combining" eine Verarbeitungsmöglichkeit der Empfangssignale eines Diversity-Empfängers bekannt, bei dem jedes Empfangssignal entsprechend dem Nutzsignal/Störsignal-Verhältnis entsprechend gewichtet und die gewichteten Signale zu einem Signal aufsummiert werden.

Beim Maximal Ratio Combining, soweit es für analoge Signale bekannt ist, müssen die analogen Signale vor der Summierung in ihrer Phasenlage entsprechend einander angepaßt werden. Liegen den empfangenen Signalen hingegen Datensignale mit einer so großen Datenrate zugrunde, daß aufgrund des dispersiven Kanals Nachbarzeichenstörungen auftreten, so führt die Addition der einzelnen Empfangssignale im allgemeinen zu einer Verschlechterung des Gesamtsignals.

Aus der DE 33 38 510 A1 ist ein Verfahren zur Wiedergewinnung der Information eines Datensignals bei Mehrwegeübertragung bekannt. Bei diesem Verfahren werden die am Ende der einzelnen Übertragungswege empfangenen Zeichen des Datensignals mit einem Wichtungsfaktor multipliziert. Die gewichteten Zeichen aller Übertragungswege werden aufsummiert. Die Wichtungsfaktoren hängen dabei vom Zählerstand eines Zählers ab, der beim Erkennen eines Fehlers inkrementiert und bei mehreren aufeinanderfolgenden fehlerfreien Zeichen inkrementiert wird.

Aus der US-PS 4,328,582 ist ein Empfänger mit mehreren Empfangszweigen zum Decodieren der Bits einer empfangenen Nachricht bekannt. Kanalstörungen können die empfangene Nachricht verzerrt haben, so daß die Nachricht mit einer gewissen Wahrscheinlichkeit verfälscht ist. Der Empfänger enthält Mittel zur Bestimmung der Fehlerwahrscheinlichkeit in jedem Empfangszweig. In Abhängigkeit von der ermittelten Fehlerwahrscheinlichkeit werden die von den Empfangszweigen empfangenen Bits gewichtet und aufaddiert.

Aufgabe der vorliegenden Erfindung ist es daher, auf möglichst einfache Weise einen Diversity-Empfänger der eingangs genannten Art so auszugestalten, daß er zur Verarbeitung von Datensignalen mit Nachbarzeichenstörungen geeignet ist.

Diese Aufgabe wird dadurch gelöst, daß in jedem Empfangszweig ein Entzerrer vorgesehen ist, welcher sowohl zur Entzerrung der bei der Übertragung zum Empfänger verzerrten Datenfolge als auch zur Lieferung der Zuverlässigkeitsinformation dient.

Durch den in jedem Empfangszweig angeordneten Entzerrer werden aus den einzelnen Empfangssignalen Datenelemente detektiert. Die detektierten Datenelemente können sodann beispielsweise durch Synchronisationsverfahren einander zeitgerecht gegenübergestellt werden. Dadurch ist nicht nur eine phasenrichtige Summation der Datenelemente sondern auch eine datenelementgenaue Summation möglich. Die den einzelnen Datensymbolen zugeordnete Zuverlässigkeitsinformation gibt an, mit welcher Wahrscheinlichkeit sich der Entzerrer jeweils bei einem Datenelement für ein bestimmtes Datensymbol entschieden hat. Durch geeignete Kombination der für ein Datenelement detektierten Datensymbole unter Berücksichtigung der zugeordneten Zuverlässigkeitsinformationen läßt sich jeweils ein Datensymbol ermitteln, dessen Zuverlässigkeit höher ist als die Zuverlässigkeit des entsprechenden Datensymbols in jedem einzelnen Empfangszweig. Die Kombination aufgrund momentaner Qualitätsschätzung bietet gegenüber anderen Verfahren, bei denen eine reine Mehrheitsentscheidung oder eine Kombination gewichtet mit einer über mehrere Datenbits ermittelten Qualitätsschätzung (z.B. Nutzsignal/Störsignal-Verhältnis) durchgeführt wird, den Vorteil, daß eine weitere Verbesserung der Fehlerrate erzielt wird.

Der Erfindung liegt die Überlegung zugrunde, daß bei der Entscheidung für ein Datensymbol ein Datensymbol, für das eine hohe Zuverlässigkeit vermutet wird, ein deutlich höheres Gewicht haben soll, als ein oder mehrere andere Datensymbole mit geringer Zuverlässigkeitsvermutung. Auf der anderen Seite sollen mehrere Datensymbole mit durchschnittlichen Zuverlässigkeitswerten auch ein Datensymbol mit gutem Zuverlässigkeitswert überstimmen können. Somit wird die Entscheidung für ein Datensymbol im wesentlichen von den Empfangszweigen mit der besseren Empfangsqualität bestimmt.

Aufgrund der statistisch unabhängigen Schwankungen der Rauschsignale in den verschiedenen Empfängerzweigen sind die momentanen Störamplituden für ein einzelnes Bit im allgemeinen unterschiedlich. Da die Güte der Kombination primär von dem Zweig mit der momentan höheren Zuverlässigkeit bestimmt wird, ist selbst dann noch eine Qualitätsverbesserung erzielbar, wenn die Feldstärken an den Empfangsantennen sowie die Leistungen des in den Empfänger-Eingangsstufen erzeugten Rauschens identisch sind.

Bei Datenübertragungssystemen, bei denen die gesendeten digitalen Daten Binärwerte (beispielsweise 0 und 1) sind, können die Entzerrer in vorteilhafter Weise so ausgestaltet werden, daß zur Darstellung des für jedes Datenelement detektierten Datensymbols (0 bzw. 1) und der diesem Datensymbol zugeordneten Zuverlässigkeitsinformation nur ein einziger Zahlenwert vorgesehen ist, wobei das Vorzeichen des vorgesehenen Zahlenwertes eine Information über das für ein Datenelement jeweils detektierte Datensymbol und der Betrag des vorgesehenen Zahlenwertes die diesem Datenelement zugeordnete Zuverlässigkeitsinformation bildet. Der Betrag des Zahlenwertes wird im folgenden auch als Zuverlässigkeitsbeiwert bezeichnet. Vorzugsweise ist der Zahlenwert für Bit i ein Schätzwert für die Größe

$$q(b_i) = C(b_i) \cdot \ln \frac{1 - P(b_i)}{P(b_i)}$$

wobei $P(b_i)$ die momentane Bitfehlerwahrscheinlichkeit im i-ten Bitintervall darstellt und der Faktor $C(b_i)$ entsprechend dem Binärwert des geschätzten binären Datensymbols die Werte +1 (beispielsweise für den Binärwert 1) oder -1 (beispielsweise für den Binärwert 0) einnehmen kann.

Die Zusammenfassung von Binärwert und Zuverlässigkeitsinformation in dieser Form bietet den Vorteil, daß bei der Ermittlung des Schätzwertes für das Datensymbol eines Datenelements die in den einzelnen Empfangszweigen zu jedem Datenelement ermittelten Zahlenwerte lediglich addiert werden müssen, wobei das Vorzeichen der bei der Addition dieser Zahlenwerte ergebenden Summe ohne weitere Berechnung sofort den Binärwert dieses Datenelements ergibt. Sofern für eine weitere Verarbeitung eine Zuverlässigkeitsinformation bzw. ein Zuverlässigkeitsbeiwert für diesen Schätzwert benötigt wird, ist dies der Absolutwert dieser Summe, die gegebenenfalls entsprechend der Anzahl der verwendeten Empfangszweige entsprechend noch normiert werden kann. Diese Ausführungsform bietet den Vorteil, daß ein Schätzwert mit nur geringstem Aufwand erhalten wird.

Anhand eines in der Zeichnung dargestellten Ausführungsbeispiels wird die Erfindung nun näher beschrieben und erläutert.

Es zeigen:

Fig. 1    einen Empfänger mit zwei Empfangszweigen.
Fig. 2    ein Kanalmodell eines dispersiven Übertragungskanals.
Fig. 3    ein Zustandsdiagramm für den verwendeten Entzerrer/Detektor.
Fig. 4    ein Zustandsdiagramm mit allen Pfaden für $b_{i-n} = o$.
Fig. 5    ein Zustandsdiagramm mit allen Pfaden für $b_{i-n} = 1$.
Fig. 6    eine schematische Darstellung des Entzerrers-Detektors.

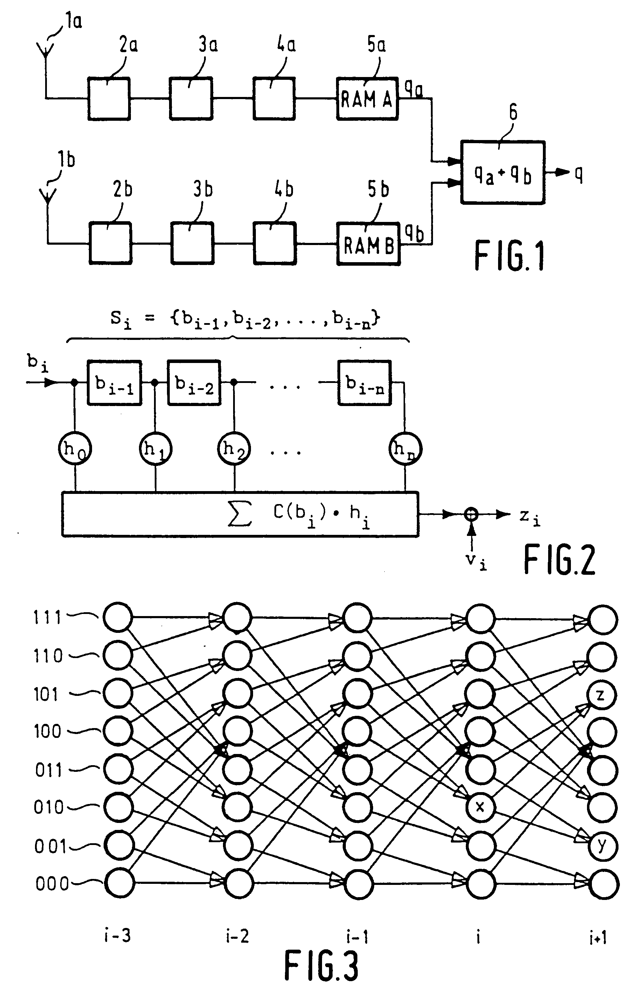

Die Fig. 1 zeigt einen Empfänger für binäre Daten mit zwei getrennten Antenneneingängen und zwei gleich aufgebauten getrennten Empfangszweigen. In jedem Empfangszweig ist ein HF-Empfangsteil 2a, 2b, eine Einrichtung zur Erzeugung von Normal- und Quadraturkomponente im Basisband 3a, 3b, und ein Entzerrer 4a, 4b angeordnet.

Die Entzerrer 4a, 4b sind so ausgestaltet, daß sie neben der Detektierung der empfangenen Daten auch zu jedem detektierten Datensymbol eines Datenelements eine Zuverlässigkeitsinformation liefern. Diese Zuverlässigkeitsinformation gibt an, mit welcher Wahrscheinlichkeit sich der Entzerrer für das jeweils detektierte Datensymbol entschieden hat. Ein Entzerrer mit solchen Eigenschaften wird zunächst im folgenden beschrieben.

Der Entzerrung eines empfangenen Signales r(t) liegt ein Kanalmodell zugrunde, das den dispersiven Übertragungskanal näherungsweise durch ein lineares endliches Transversalfilter beschreibt. In Fig. 2 ist ein solches Kanalmodell dargestellt, bei dem die Übertragungseigenschaften des Übertragungskanals durch Filterkoeffizienten $h_0 \ldots h_n$ nachgebildet werden. Bei der Übertragung eines Binärzeichens $b_i$ und dem diesen Binärzeichen $b_i$ vorangegangenen n Binärzeichen $b_{i-1} \ldots b_{i-n}$ wird die Linear-Kombination $C(b_i) * h_0 + C(b_{i-1}) + \ldots C(b_{i-n}) * h_n$ gebildet und zusätzlich mit einem Rauschsignal $v_i$ überlagert.

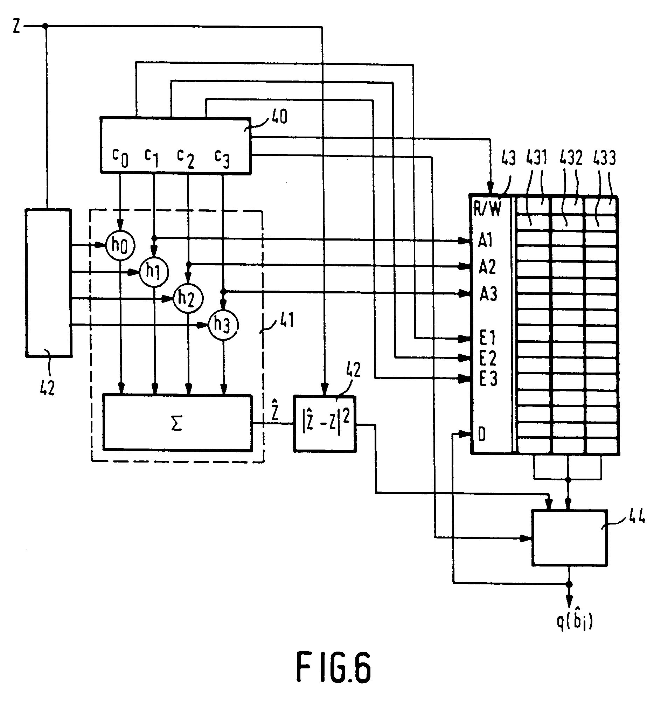

Im Empfänger wird versucht, genau mit diesem Kanalmodell die auf dem Übertragungsweg auftretenden Verzerrungen durch die gedächtnisbehafteten Linear-Kombinationen mittels eines Transversalfilters 41 in Fig. 6 nachzubilden. Die Nachbildung des Übertragungsweges wird durch entsprechende Einstellung der Filterkoeffizienten $h_0$, $h_1$,...$h_n$ erreicht. Die Filterkoeffizienten $h_0$, $h_1$,..., $h_n$ sind hierbei aus den Abtastwerten einer geschätzten Impulsantwort des Übertragungskanales ableitbar. Hierzu kann beispielsweise eine sogenannte Trainingssequenz verwendet werden, die aus einer Binärzeichenfolge besteht, die sowohl dem Sender als auch dem Empfänger bekannt ist. Bei jedem Empfang der Trainingssequenz werden die Filterkoeffizienten $h_0$, $h_1$,...$h_n$ so eingestellt, daß das Ausgangssignal mit dem entsprechenden Teil des Empfangssignals möglichst gut übereinstimmt. Dieser Vorgang wird allgemein als Kanalschätzung bezeichnet und ist beispielsweise in dem Aufsatz A. Baier, "Correlative and iterative channel estimation in adaptive Viterbi equalizers for TDMA mobile radio systems", ITG-Fachbericht 109 zur Fachtagung "Stochastische Modelle und Methoden in der Informationstechnik", April 1989, abgedruckt in VDE-Fachbericht 107, VDE-Verlag, Berlin, Seiten 363 bis 368 beschrieben. Dort finden sich auch weiterführende Literaturhinweise. Ein beispielsweise auf die Weise ausgeführter Kanalschätzer trägt im Ausführungsbeispiel das Bezugszeichen 42.

Zur Entzerrung und Detektierung wird häufig das sogenannte Viterbi-Verfahren benutzt. Der hier beschriebene Entzerrer-Detektor basiert ebenfalls auf diesem Verfahren.

Zur Darstellung des angewandten Verfahrens wird im folgenden ein Zustandsdiagramm verwendet, mit dem üblicherweise auch das Viterbi-Verfahren beschrieben wird. Das Zustandsdiagramm ist ein Graph mit in vertikaler Richtung aufgetragenen Reihen von jeweils $2^n$ Knoten. Fig. 3 zeigt beispielshaft einen solchen Graphen für n = 3. Jeder Knoten repräsentiert eine der Kombinationen, die sich aus n Binärzeichen ergeben. n ist hierbei die Anzahl der einem gerade empfangenen Binärzeichen jeweils vorausgehenden Binärzeichen, deren Einfluß auf das zu schätzende Binärzeichen bei der Entzerrung berücksichtigt werden soll und entspricht der Anzahl der Speicherelemente des Kanalmodells nach Fig. 2. Jede Kombination dieser Binärzeichen wird im folgenden als Zustand bezeichnet. Im Zustandsdiagramm sind in horizontaler Richtung mehrere dieser Reihen angeordnet. Jede vertikale Reihe ist einem bestimmten Abtastzeitpunkt i-3, i-2, i-1, i, i+1 zugeordnet. Die einzelnen, einem Knoten zuordenbaren, Binärwerte (in Fig. 3 000...111) werden als dessen Zustand bezeichnet. Ein Zustand entspricht jeweils einer möglichen Zuordnung der zu einem Zeitpunkt i empfangenen n letzten digitalen Abtastwerte zu einer gesendeten Binärwertfolge.

Dem in horizontaler Richtung aufgereihten Knoten ist im Zustandsdiagramm jeweils der gleiche Zustand zugeordnet, wobei die diesen Zuständen zugeordnete Binärwertfolge links aufgetragen ist. Der erste, d.h. der am meisten links stehende, Binärwert eines Zustandes entspricht hierbei dem zuletzt empfangenen Abtastwert zugeordneten Binärwert, der nächst darauffolgende Binärwert der Zuordnung zu dem diesem Abtastwert vorangegangenen Abtastwert, usw.. Zum Zeitpunkt i entspricht also der erste Binärwert dem Schätzwert $\hat{b}_i$ und der letzte Binärwert dem Schätzwert $\hat{b}_{i-n}$.

Beim Empfang eines neuen Abtastwertes $z_i$ kann diesem sowohl der Binärwert 0 als auch der Binärwert 1 zugeordnet werden. Zum Beispiel wird aus einer Binärwertfolge 010 durch die Zuordnung des neuesten Abtastwertes zu dem Binärwert 0 die Folge 0010 bzw. durch Zuordnung des neuesten Abtastwertes zu einer binären Eins die Folge 1010, die dem Übergang zum Folgezustand zugeordnet werden kann. Aus dem Zustand 010 gelangt man auf diese Weise zu den Zuständen 001 bzw. 101. Von jedem Zustand gibt es durch die Zuordnung des Abtastwertes zu einem Binärwert 0 oder einem Binärwert 1 immer nur zwei Übergänge zu jeweils einem Zustand in der zu dieser Zustandsreihe jeweils benachbarten rechten Zustandsreihe.

Im Zustandsdiagramm der Fig. 3 sind alle auf diese Weise möglichen Übergänge durch Pfeile gekennzeichnet. So zeigen die zwei Pfeile vom Knoten x, dessen Zustand der Binärwertfolge 010 zum Zeitpunkt i zugeordnet ist, zum einen für einen Null-Übergang auf den Knoten y, dem zum Zeitpunkt i+1 der Zustand 001 und zum anderen für einen Eins-Übergang auf den Knoten z, dem zum Zeitpunkt i+1 der Zustand 101, zugeordnet ist.

Für jeden Übergang von einem Knoten auf den nächstfolgenden Knoten wird die Wahrscheinlichkeit berechnet, mit der dieser Übergang erfolgt ist. Durch Aneinanderreihung von zusammenhängenden Übergängen zwischen Knoten benachbarter vertikaler Knotenreihen erhält man einen Pfad. Dieser Pfad ist gleichbedeutend der rekonstruierten Binärfolge $\hat{b}_i$, $\hat{b}_{i-1}$...$b_{i-n}$. Durch multiplikative Verknüpfung der Wahrscheinlichkeiten der einzelnen Übergänge eines Pfades ergibt sich die gesamte Wahrscheinlichkeit des Pfades.

Zur Berechnung der Übergangswahrscheinlichkeit von einem Zustand zu einem anderen Zustand werden die einzelnen Binärwerte der Binärzeichen $b_i$...$b_{i-n}$ eines Zustands als Eingangsparameter $c_1$...$c_n$ des Transversalfilters verwendet. Der erste Eingangsparameter $c_0$ entspricht jeweils dem Binärwert des Übergangs, also dem gerade empfangenen Abtastwert zugeordneten Binärwert. Der Ausgangswert des Transversalfilters ergibt in erster Näherung unter Vernachlässigung von Störungen durch die im Eingangssignal enthaltenen Rauschsignale $v_i$ etc. den Wert, den der Abtastwert annehmen müßte, wenn die als Eingangsparameter verwendete Binärzeichenfolge $b_i$, $b_{i-1}$...$b_{i-n}$ über den Funkübertragungsweg gesendet und empfangen wird. Durch Vergleich des Ausgangswertes $\hat{z}_i$ mit dem tatsächlichen Abtastwert $z_i$ kann daher die am wahrscheinlichsten

4

gesendete Binärzeichenfolge gefunden werden.

Allerdings bietet eine große Übergangswahrscheinlichkeit von einem Zustand zu einem zeitlich folgenden Zustand noch keine ausreichende Gewähr für die Richtigkeit dieses Übergangs. Denn durch kurzzeitige Störungen oder Signalrauschen kann zufälligerweise ein tatsächlich nicht erfolgter Zustandsübergang als wahrscheinlichster Übergang erscheinen. Korrektere Schätzungen der Zustandsübergänge und somit der Schätzung des Binärwertes des gerade empfangenen digitalen Abtastwertes werden durch eine Berücksichtigung des gesamten bisherigen Signalverlaufs in Form einer Wahrscheinlichkeitsbetrachtung aller Zustandsübergänge, die zu einem der $2^n$ Zustände des betrachteten Zeitpunktes führen, erzielt. Hierzu kann jedem Zustand eine Gesamtmaßzahl zugeordnet werden, die entsprechend einer Bildung der Verbundwahrscheinlichkeit durch multiplikative Verknüpfung aller einzelnen Maßzahlen der einzelnen Zustandsübergänge, die auf diesen Zustand führten, gebildet wird.

Es ist bekannt, anstelle der Maßzahlen sogenannte Metriken zu verwenden. Die Metrik berechnet sich hierbei aus dem negativen Logarithmus der jeweiligen Maßzahl. Dies hat unter anderem den Vorteil, daß zur Errechnung einer Verbundwahrscheinlichkeit, bei der die einzelnen Maßzahlen zu multiplizieren sind, nun die Metriken nur noch addiert werden müssen. Im Ausführungsbeispiel wird zur Bildung der Metrik der Ausgangswert $\hat{z}_i$ des Transversalfilters 41 vom digitalen Abtastwert $z_i$ in einem Signalbewerter 42 subtrahiert und betragsmäßig quadriert. Auf diese Weise wird eine quadratische Distanz gebildet. Unter der Annahme Gaußschen weißen Rauschens am Empfängereingang als einzige Störquelle entspricht diese quadratische Distanz dem negativen Logarithmus der Wahrscheinlichkeit eines Zustandsübergangs. Ohne größere Einbuße an Genauigkeit wird diese quadratische Distanz üblicherweise auch dann verwendet, wenn das Störsignal kein Gaußes weißes Rauschen ist. In diesem Fall ist die Metrik nur eine Näherung für den negativen Logarithmus der Wahrscheinlichkeit eines Zustandsübergangs. Je kleiner die quadratische Distanz ist, umso größer ist die Wahrscheinlichkeit, daß der empfangene Abtastwert aus der als Eingangsparameter verwendeten Binärzeichenfolge hervorgegangen ist.

Wegen der Linear-Kombinationen der jeweils n letzten Binärzeichen kann aber immer erst nach Empfang aller n Binärzeichen ein optimaler Schätzwert gebildet werden. Beim Empfang des Abtastwertes $z_i$ wird daher der Schätzwert $\hat{b}_{i-n}$ gebildet.

Der dem Abtastwert $z_i$ zugeordnete Schätzwert $\hat{b}_i$ ist zeitlich den Übergängen von den Zuständen des Zeitpunkts i auf die Zustände des Zeitpunkts i+1 zugeordnet.

Zur Bildung des Schätzwertes $\hat{b}_{i-n}$ werden daher in einem ersten Schritt zunächst alle Übergangswahrscheinlichkeiten von allen Zuständen i auf die zeitlich folgenden Zustände i+1 berechnet, bei denen der Übergang des Binärwertes $\hat{b}_{i-n}$ dem Binärwert 0 zugeordnet war. Die Gesamtmetrik der neuen auf diese Weise erreichbaren Zustände wird vorläufig dann aus der Gesamtmetrik des betreffenden Vorgängerzustandes L des Zeitpunkts i und der Metrik des Übergangs von diesem Vorgängerzustand auf den nächsten Zustand des Zeitpunkts i+1 berechnet.

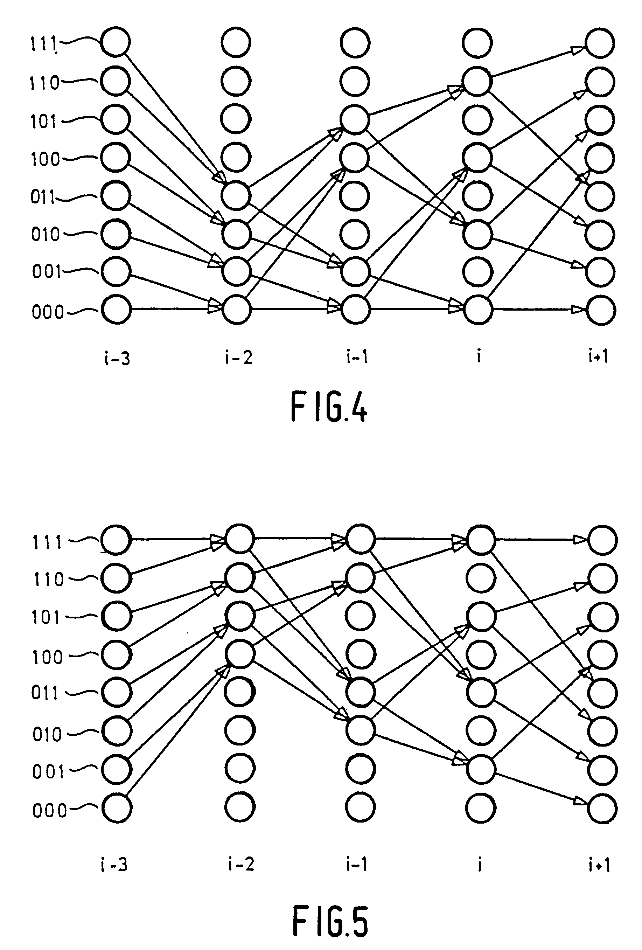

In einem zweiten Schritt wird auf gleiche Weise jeweils die Gesamtmetrik der Zustände zum Zeitpunkt i+1 berechnet, bei denen die Binärzeichen $\hat{b}_{i-n}$ einem Binärwert 1 entsprachen, also einen Eins-Übergang vollzogen. In Fig. 4 ist das Zustandsdiagramm der Fig. 3 wiedergegeben, bei dem jetzt nur noch alle Pfade eingezeichnet sind, bei denen alle Übergänge vom Zeitpunkt i-n = i-3 auf den Zeitpunkt i+1-n = i-2 Null-Übergänge, d.h. alle Übergänge, bei denen Binärzeichen $\hat{b}_{i-3}$ jeweils der Binärwert 0 zugeordnet war. Fig. 5 hingegen ist ein Zustandsdiagramm, in dem nur noch die Pfade eingezeichnet sind, bei denen den Übergängen vom Zeitpunkt i-3 auf den Zeitpunkt i-2 für das Binärzeichen $\hat{b}_{i-3}$ der Binärwert 1 zugeordnet war.

Aus allen Gesamtmetriken der Zustände, die sich durch einen Nullübergang und aus allen Gesamtmaßzahlen aller Zustände, die sich aus einem Einsübergang ergeben haben, wird jeweils die kleinste Gesamtmetrik ermittelt. Das heißt, es wird aus dem Teilzustandsdiagramm der Fig. 4 und dem Teilzustandsdiagramm der Fig. 5 jeweils der Pfad mit der kleinsten Gesamtmetrik ausgewählt. Diese beiden Pfade werden im folgenden als Null-Minimalpfad bzw. als Eins-Minimalpfad bzw. die diesen Pfaden zugeordneten Gesamtmetriken als Null-Minimal-Gesamtmetrik und als Eins-Minimal-Gesamtmetrik bezeichnet.

Der vom Zeitpunkt i-n ausgehende Übergang, der der kleineren dieser beiden ausgewählten Minimal-Gesamtmetriken zugeordnet ist, ergibt dann den Schätzwert $\hat{b}_{i-n}$ für das zum Zeitpunkt i-n gesendete Binärzeichen $b_{i-n}$.

Jede der beiden ausgewählten Minimal-Gesamtmetriken gibt für sich die Wahrscheinlichkeit wieder, mit der der jeweils ausgewählte Pfad, der durch den Zustand des jeweils ausgewählten Knotens repräsentiert ist, im jeweils günstigsten Fall dem Schätzwert $\hat{b}_{i-n} = 0$ bzw. dem Schätzwert $\hat{b}_{i-n} = 1$ zugeordnet werden kann. Diese Wahrscheinlichkeitswerte lassen sich aus den Gesamtmetriken zurückberechnen. Bei Maßzahlen müßten die einzelnen Maßzahlen dividiert werden, um eine Zuverlässigkeitsinformation zu erhalten, die angibt, um wieviele Mal der gewählte Schätzwert wahrscheinlicher ist als sein Komplementärwert.

Durch Verwendung der Metriken vereinfacht sich diese Berechnung. Durch Subtraktion der Null-Minimal-Gesamtmetrik von der Eins-Minimal-Gesamtmetrik wird ein Zahlenwert erhalten, dessen Vorzeichen den wahrscheinlicheren der beiden Schätzwerte angibt. Ein positives Vorzeichen zeigt hierbei an, daß der Binärwert 1 als Schätzwert wahrscheinlicher ist als der Binärwert 0. Der Absolutbetrag dieses Wertes hingegen bildet den Zuverlässigkeitsbeiwert $q(\hat{b}_{i-n})$.

In einem letzten Schritt werden die beiden für einen Zustand vorliegenden neu gebildeten Gesamtmaßzahlen für jeden Zustand miteinander verglichen und der jeweils kleinere der beiden Werte als neue Gesamtmaßzahl dem Zustand zugeordnet.

Zur Durchführung dieses Verfahrens sind im Ausführungsbeispiel Speicherplätze in einem Speicherbaustein 43 vorgesehen, die in drei Reihen von je $2^n$ Speicherplätzen organisatorisch geordnet sind. Diese Reihen werden im folgenden als erste, zweite bzw. dritte Speicherplatzreihe 431, 432, 433 bezeichnet. Die Adresse $A_n...A_1$ eines Speicherplatzes entspricht hierbei jeweils einem der $2^n$ Zustände. Unter der Adresse eines Speicherplatzes ist in der ersten Speicherplatzreihe 431 die einem Zustand zugeordnete Gesamtmetrik L gespeichert. In der zweiten Speicherplatzreihe 432 ist die jeweilige Gesamtmetrik $L_0$, die erhalten wird, wenn dem gerade empfangenen Abtastwert eine binäre Null zugeordnet wird und in der dritten Speicherplatzreihe ist die jeweilige Gesamtmetrik $L_1$, die erhalten wird, wenn dem gerade empfangene Abtastwert eine binäre Eins zugeordnet wird, gespeichert. Die Auswahl der entsprechenden Speicherplatzreihe 431, 432, 433 erfolgt durch Steuersignale einer Steuervorrichtung 40. Die Steuersignale sind an entsprechende Enable-Eingänge E1, E2, E3 des Speicherbausteins 43 geführt. Die Steuerschaltung 40 gibt bei der Ansteuerung eines Speicherplatzes dessen Adresse $A_n...A_1$ gleichzeitig als Eingangsparameter $c_1...c_n$ dem Transversalfilter 41 vor.

Der erste Eingangsparameter $c_0$ wird von der Steuerschaltung für jede gebildete Adresse zunächst als Binärwert 0 vorgegeben. Aus dem auf diese Weise erhaltenen Wert $\hat{z}_i$ des Transversalfilters 41 und dem Abtastwert $z_i$ wird in einer Bewertungsschaltung 42 die quadratische Distanz $I = (\hat{z}_i - z_i)^2$ gebildet. Aus dieser quadratischen Distanz I und der in der ersten Speicherplatzreihe 431 unter der in der jeweiligen Adresse gespeicherten Gesamtmetrik L wird in einem Rechenwerk 44 durch Addition der beiden Werte eine neue Gesamtmetrik $L_0$ gebildet, welche in der zweiten Speicherplatzreihe 432 unter der jeweils eingestellten Adresse gespeichert wird. Hierzu ist das Ergebnis der Addition dem Dateneingang D des Speicherbausteins 44 zugeführt. Die entsprechenden Lese- bzw. Schreibvorgänge des Speicherbausteins 43 steuert das Steuerwerk über den Schreib-Lese-Eingang R/W des Speicherbausteins 43.

Auf gleiche Weise wird dem ersten Eingangsparameter $c_0$ dann der Binärwert 1 vorgegeben und die auf diese Weise erhaltenen Gesamtmetriken $L_1$ werden in der dritten Speicherplatzreihe 433 gespeichert.

Nachdem die Steuerschaltung 40 durch Durchlaufen aller Adreßkombinationen alle Speicherinhalte der zweiten und dritten Speicherplatzreihen 432, 433 neu berechnet hat, wird aus allen neuen Gesamtmetriken $L_0$ der zweiten Registerzellen 432 und aus allen Gesamtmetriken $L_1$ der dritten Registerzellen 433 mittels des Rechenwerkes 44 der jeweils kleinste Wert ausgewählt. Diese beiden Werte werden im Rechenwerk 44 subtrahiert. Wie bereits geschildert, ergibt sich aus dem Vorzeichen der Differenz der Schätzwert $\hat{b}_{i-n}$ und aus dem Absolutbetrag der Differenz der diesem Schätzwert zugeordnete Zuverlässigkeitsbeiwert $q(\hat{b}_{i-n})$.

Nachdem der Schätzwert ermittelt ist, erfolgt nun die Umspeicherung der in den zweiten und dritten Speicherplatzreihen 432, 433 abgelegten Gesamtmetriken $L_1$, $L_0$ für die neuen Zustände. Hierzu erzeugt die Steuerschaltung zunächst die Adressen 000 und 001. Aus den Zuständen 000 und 001 ergibt sich, wie bereits beschrieben, durch einen Null-Übergang jeweils der Zustand 000. Die Inhalte der Speicherplätze in der zweiten Speicherplatzreihe 432 an den Adressen 000 und 001 entsprechen genau einem Null-Übergang von diesen beiden Zuständen auf den Zustand 000. Die Inhalte dieser beiden adressierten Speicherplätze der zweiten Speicherplatzreihe 432 werden daher im Rechenwerk 44 miteinander verglichen und der kleinere der beiden Werte wird als neuer Inhalt unter der Adresse 000 in der ersten Speicherplatzreihe 431 eingeschrieben. Die Inhalte der an den Adressen 000 und 001 der dritten Speicherplatzreihe 433 adressierten Speicherplätze entsprechen einem Eins-Übergang auf den Zustand 100. Die Inhalte dieser beiden adressierten Speicherplätze werden daher ebenfalls im Rechenwerk 44 verglichen und der kleinere der beiden Werte der in diesen Registerzellen gespeicherten Gesamtmetriken als neue Gesamtmetrik unter dem der Adresse 100 entsprechenden Speicherplatz der ersten Speicherplatzreihe 431 abgelegt.

Durch entsprechende Ansteuerung und Vergleich der übrigen Speicherplätze wird jeweils die neue Gesamtmetrik eines neuen Zustands ermittelt und in die dem neuen Zustand zugeordnete Adresse der ersten Speicherplatzreihe eingeschrieben. Anschließend wird bis zum Eingang eines neuen Abtastwertes $z_{i+1}$ gewartet, und auf schon beschriebene Weise der zugehörige Schätzwert $\hat{b}_{i+1-n}$ gebildet.

In jedem Empfangszweig werden die Zahlenwerte $q_a$ bzw. $q_b$ getrennt ermittelt und jeweils in einem eigenen Speicherbereich $RAM_a$ bzw. $RAM_b$ zwischengespeichert. Da die ausgesandten Daten jeweils in Datenblöcken zusammengefaßt sind, kann jeder Zahlenwert $q_a$ bzw. $q_b$ einem bestimmten Datenelement eines solchen Datenblocks zugeordnet werden. Jeweils sich ihrer Stellung im Datenblock entsprechende Datenelemente werden paarweise gleichzeitig aus den Speicherbereichen RAM$_a$ bzw. RAM$_b$ ausgelesen und in einem Addierer 6 addiert. Das Ergebnis des Addierers 6 ist der Schätzwert q, der sich aus der Addition der beiden Schätzwerte q$_a$ und q$_b$ der beiden Empfangszweige A und B ergibt. Wie schon auch bei den Schätzwerten q$_a$ bzw. q$_b$ der beiden Empfangszweige, gibt auch hier das Vorzeichen wiederum das Datensymbol $\hat{b}$ des Schätzwertes q und der Absolutbetrag des Schätzwertes q den Zuverlässigkeitsbeiwert zu diesen Datensymbolen $\hat{b}$ an.

Bei mehr als zwei Empfangszweigen ist der Addierer 6 lediglich mit einer entsprechenden Anzahl von Eingängen auszustatten, wobei die an den einzelnen Eingängen anliegenden Zahlenwerte wiederum zu einem einzigen Zahlenwert q addiert werden.

**Patentansprüche**

1. Empfänger mit mindestens zwei Empfangszweigen zum Empfang einer gesendeten Datenfolge (b$_i$), bei dem die Signale jedes Empfangszweiges ihrer Empfangsgüte entsprechend kombiniert werden, wobei aus detektierten Datenelementen ($\hat{b}_i$) der einzelnen Empfangszweige mittels einer diesen Datenelementen ($\hat{b}_i$) zugeordneten Zuverlässigkeitsinformation (q($\hat{b}_i$)) die gesendete Datenfolge (b$_i$) geschätzt wird,
   <u>dadurch gekennzeichnet,</u>
   daß in jedem Empfangszweig ein Entzerrer (4a, 4b) vorgesehen ist, welcher sowohl zur Entzerrung der bei der Übertragung zum Empfänger verzerrten Datenfolge (b$_i$) als auch zur Lieferung der Zuverlässigkeitsinformation (q($\hat{b}_i$)) dient.

2. Empfänger nach Anspruch 1 für Datensignale mit einem Datensymbolvorrat von genau zwei Datensymbolen,
   <u>dadurch gekennzeichnet,</u>
   daß zur Darstellung des für jedes Datenelement detektierten Datensymbols und der diesem Datensymbol zugeordneten Zuverlässigkeitsinformation nur ein einziger Zahlenwert (q) vorgesehen ist, wobei das Vorzeichen des vorgesehenen Zahlenwertes eine Information über das für ein Datenelement jeweils detektierte Datensymbol ($\hat{b}$) und der Betrag des vorgesehenen Zahlenwertes die diesem Datenelement zugeordnete Zuverlässigkeitsinformation bildet.

3. Empfänger nach Anspruch 2,
   <u>dadurch gekennzeichnet,</u>
   daß der Zahlenwert q(b$_i$) näherungsweise dem Ausdruck

$$q(b_i) = C(b_i) \cdot \ln \frac{1 - P(b_i)}{P(b_i)}$$

entspricht, wobei P(b$_i$) die Wahrscheinlichkeit ist, mit der sich der Entzerrer für ein Datensymbol (b$_i$) entschieden hat und wobei der Faktor C(b$_i$) je nach detektiertem Datensymbol (b$_i$) den Wert +1 bzw. -1 aufweist.

4. Empfänger nach Anspruch 3,
   <u>dadurch gekennzeichnet,</u>
   daß die für jeden Empfangszweig berechneten Zahlenwerte (q$_a$, q$_b$) addiert werden.

5. Empfänger nach einem der Ansprüche 1 bis 4,
   <u>dadurch gekennzeichnet,</u>
   daß in den Entzerrern (4a,4b) jeweils ein Transversalfilter (41) vorgesehen ist, das zur Nachbildung des Übertragungskanals dient und
   daß eine Ableitung der Filterkoeffizienten (h$_i$) des Transversalfilters (41) aus einer geschätzten Impulsantwort des Übertragungskanals vorgesehen ist.

6. Empfänger nach Anspruch 5,
   <u>dadurch gekennzeichnet,</u>
   daß zur Ableitung der Filterkoeffizienten (h$_i$) die Übertragung einer Trainingssequenz, die sowohl dem Sender als auch dem Empfänger bekannt ist, über den Übertragungskanal vorgesehen ist.

7. Empfänger nach einem der Ansprüche 1 bis 6,

7

dadurch gekennzeichnet,
daß in den Entzerrern (4a, 4b) das Viterbi-Verfahren integriert ist.

8. Empfänger nach Anspruch 7,
dadurch gekennzeichnet,
daß die Entzerrer vorgesehen sind zum Bilden von binären Schätzwerten ($\hat{b}_i$) aus einer Folge von Abtastwerten ($z_i$) eines Empfangssignales (z), die Binärwerten Null oder Eins von ausgegebenen Binärzeichen ($b_i$) zugeordnet sind und bei der jeder Abtastwert ($z_i$) von dem ihm zugeordneten Binärzeichen ($b_i$) und von n unmittelbar diesem Binärzeichen vorangegangenen Binärzeichen ($b_{i-1}$, $b_{i-2}$, ..., $b_{i-n}$) abhängig ist, indem jedem Abtastwert ($z_i$) $2^n$ Zustände zugeordnet werden und jeweils für den Übergang von einem Zustand auf einen zeitlich nachfolgenden Zustand eine Maßzahl (1) für die Wahrscheinlichkeit des Überganges zugeordnet wird und durch Aneinanderreihung von Zustandsübergängen Pfade gebildet werden, wobei aus allen Maßzahlen (1) eines Pfades eine Gesamtmaßzahl ($L_0$, $L_1$) gebildet wird und von allen auf einen Zustand führenden Pfaden nur jeweils der mit der minimalsten Gesamtmaßzahl betrachtet wird, daß von allen möglichen Pfaden, deren n letzte Zustandsübergänge einem Binärwert Eins entsprachen und von allen möglichen Pfaden, deren n letzte Zustandsübergänge einem Binärwert Null entsprachen, jeweils derjenige Pfad mit der kleinsten Maßzahl ausgewählt wird und daß der Binärwert, der dem kleinsten der beiden ausgewählten Werte zugeordnet ist, den Schätzwert ($\hat{b}_{i-n}$) ergibt und aus den beiden ausgewählten Maßzahlen eine Zuverlässigkeitsinformation ($q(\hat{b}_{i-n})$) für diesen Schätzwert ($\hat{b}_{i-n}$) gebildet wird.

## Claims

1. Receiver with at least two receiving branches for receiving a transmitted data sequence ($b_i$), in which the signals of each receiving branch are combined in accordance with their receiving quality, while the transmitted data sequence ($b_i$) is estimated based upon detected data elements ($\hat{b}_i$) of the individual receiving branches by means of reliability information ($q(\hat{b}_i)$) assigned to these data elements ($\hat{b}_i$), characterized in that each receiving branch comprises an equalizer (4a, 4b) which is used both for equalizing the data sequence ($b_i$) distorted during transmission to the receiver and for producing reliability information ($q(\hat{b}_i)$).

2. Receiver as claimed in Claim 1 for data signals having a data symbol stock of exactly two data symbols, characterized in that for representing the data symbol detected for each data element and the reliability information assigned to this data symbol only a single numerical value (q) is available for which the sign of the provided numerical value represents information about each data symbol ($\hat{b}$) detected for a data element and the amount of the numerical value represents the reliability information assigned to this data element.

3. Receiver as claimed in Claim 2, characterized in that the numerical value $q(b_i)$ approximately corresponds to the equation

$$q(b_i) \ = \ C(b_i) \cdot \ln \frac{1 - P(b_i)}{P(b_i)}$$

where $p(b_i)$ is the probability with which the equalizer has decided for a data symbol ($b_i$) and where the factor $C(b_i)$ has either the value +1 or -1 according to the detected data symbol ($b_i$).

4. Receiver as claimed in Claim 3, characterized in that the numerical values ($q_a$, $q_b$) computed for each receiving branch are added together.

5. Receiver as claimed in Claims 1 to 4, characterized in that each equalizer (4a, 4b) includes a transversal filter (41) which is used for copying the transmission channel, and in that the filter coefficients ($h_i$) of the transversal filter (41) are derived from an estimated impulse response of the transmission channel.

6. Receiver as claimed in Claim 5, characterized in that for deriving the filter coefficients ($h_i$) a training sequence known to both the transmitter and the receiver is transmitted by the transmission channel.

7. Receiver as claimed in Claims 1 to 6, characterized in that the Viterbi algorithm is integrated with the equalizers (4a, 4b).

8. Receiver as claimed in Claim 7, characterized in that the equalizers are provided for forming binary estimates $(\hat{b}_i)$ from a sequence of sample values $(z_i)$ of an input signal $(z)$, which sample values are assigned the binary 'zero' or 'one' value of transmitted binary element $(b_i)$ and each sample value $(z_i)$ depends on the binary element $(bi)$ assigned thereto and on n binary elements $(b_{i-1}, b_{i-2}, ..., b_{i-n})$, while $2^n$ states are assigned to each sample value $(z_i)$ and for the transition from one state to a second state following in time a parameter (1) is assigned to the transition probability and paths are formed by linking state transitions, while an overall parameter $(L_0, L_1)$ is formed from all the parameters (1) of a path and from all the paths leading to a state only the path having the minimum overall parameter is taken into account, in that from all the possible paths whose n last state transitions corresponded to a binary 'one' value and from all the possible paths whose n last state transitions corresponded to a binary 'zero' value the path having the smallest parameter is selected and in that the binary value assigned to the smaller of the two selected values yields the estimate $(\hat{b}_{i-n})$ and reliability information $(q(\hat{b}_{i-n}))$ for this estimate $(\hat{b}_{i-n})$ is formed from the two selected parameters.

## Revendications

1. Récepteur avec au moins deux branches de réception pour recevoir une suite de données émises $(b_i)$, dans lequel les signaux de chaque branche de réception sont combinés en fonction de leur qualité de réception, la suite de données émises $(b_i)$ étant évaluée à partir d'éléments de données détectés $(\hat{b}_i)$ des branches de réception individuelles à l'aide d'une information de fiabilité $(q(\hat{b}_i))$ affectée à ces éléments de données $(\hat{b}_i)$, caractérisé en ce que, dans chaque branche de réception, il est prévu un correcteur (4a, 4b) qui sert autant à la correction de la suite de données $(b_i)$ distordue lors de la transmission au récepteur qu'à la fourniture des informations de fiabilité $(q(\hat{b}_i))$.

2. Récepteur selon la revendication 1 pour signaux de données avec un approvisionnement en symboles de données de deux symboles de données exactement, caractérisé en ce que, pour représenter le symbole de données (0 ou 1) détecté pour chaque élément de données et les informations de fiabilité affectées à ce symbole de données, il n'est prévu qu'une seule valeur numérique (q), le signe de la valeur numérique prévue formant une information sur le symbole de données $(\hat{b})$ respectivement détecté pour un élément de données et le niveau de la valeur numérique délivrée formant les informations de fiabilité affectées à cet élément de données.

3. Récepteur selon la revendication 2, caractérisé en ce que la valeur numérique $q(b_i)$ répond approximativement à l'expression :

$$q(b_i) = C(b_i) . \ln \frac{1 - P(b_i)}{P(b_i)}$$

dans laquelle $P(b_i)$ est la probabilité avec laquelle le correcteur s'est décidé pour un symbole de données $(b_i)$ et le facteur $C(b_i)$ présente, en fonction du symbole de données détecté, la valeur +1 ou -1.

4. Récepteur selon la revendication 3, caractérisé en ce que les valeurs numériques $(q_a, q_b)$ calculées pour chaque branche de réception sont additionnées.

5. Récepteur selon l'une quelconque des revendications 1 à 4, caractérisé en ce que dans les correcteurs (4a, 4b) est chaque fois prévu un filtre transversal (41) qui sert à reproduire le canal de transmission, et il est prévu de déduire des coefficients de filtrage $(h_i)$ du filtre transversal (41) à partir d'une réponse impulsionnelle estimée du canal de transmission.

6. Récepteur selon la revendication 5, caractérisé en ce que, pour déduire les coefficients de filtrage $(h_i)$, il est prévu de transmettre une séquence d'entraînement, qui est connue non seulement de l'émetteur mais également du récepteur, via le canal de transmission.

7. Récepteur selon l'une quelconque des revendications 1 à 6, caractérisé en ce que le procédé Viterbi est intégré aux correcteurs (4a, 4b).

8. Récepteur selon la revendication 7, caractérisé en ce que les correcteurs sont prévus pour former des valeurs estimées binaires $(\hat{b}_i)$ à partir d'une suite de valeurs d'échantillonnage $(z_i)$ d'un signal de réception (z), qui sont affectées à des valeurs binaires 0 ou 1 par des caractères binaires délivrés ($b_i$), et dans laquelle chaque valeur d'échantillonnage ($z_i$) dépend du caractère binaire ($b_i$) qui lui est affecté et de n caractères binaires ($b_{i-1}$, $b_{i-2}$, ..., $b_{i-n}$) précédant directement ce caractère binaire, en affectant à chaque valeur d'échantillonnage ($z_i$) $2^n$ états et en affectant un chiffre de mesure (1) pour la probabilité de la transition, respectivement dans le cas d'une transition d'un état à un état qui le suit dans le temps, et on forme par alignement de transitions d'état des trajets, on forme à partir de tous les chiffres de mesure (1) d'un trajet un chiffre de mesure total ($L_0$, $L_1$) et on ne considère parmi tous les trajets menant à un état, respectivement, que celui qui a le chiffre de mesure total le plus bas, que, parmi tous les trajets possibles, dont les n dernières transitions d'état correspondaient à une valeur binaire de 1, et parmi tous les trajets possibles dont les n dernières transitions d'état correspondaient à une valeur binaire de 0, on choisit respectivement le trajet avec le chiffre de mesure le plus petit, et que la valeur binaire, qui est affectée à la plus petite des deux valeurs sélectionnées, donne la valeur estimée ($\hat{b}_{i-n}$) et l'on forme à partir des deux chiffres de mesure sélectionnés une information de fiabilité ($q(\hat{b}_{i-n})$) pour cette valeur estimée ($\hat{b}_{i-n}$).

FIG.1

$$S_i = \{b_{i-1}, b_{i-2}, \ldots, b_{i-n}\}$$

FIG.2

FIG.3

FIG.4

FIG.5

FIG.6